# EUROPÄISCHE PATENTSCHRIFT

(11) **EP 3 565 752 B1**
(45) Veröffentlichungstag und Bekanntmachung des Hinweises auf die Patenterteilung: **18.11.2020**
(21) Anmeldenummer: 18704928.3
(22) Anmeldetag: 05.02.2018
(51) Int. Cl.: B61L 27/00, G05B 9/03, B61L 7/08

(54) **UMSCHALTUNG ZWISCHEN ELEMENT-CONTROLLERN IM BAHNBETRIEB**
SWITCHOVER BETWEEN ELEMENT CONTROLLERS IN RAILWAY OPERATION
COMMUTATION ENTRE CONTRÔLEURS D'ÉLÉMENTS PENDANT LE FONCTIONNEMENT D'UNE VOIE DE CHEMIN DE FER

(30) Priorität: 28.02.2017 DE 102017203222
(43) Veröffentlichungstag der Anmeldung: 13.11.2019
(73) Patentinhaber: Siemens Mobility GmbH, 81739 München (DE)
(72) Erfinder: GIESECKE, Jörn, 38302 Wolfenbüttel (DE); SCHULZ, Oliver, 31234 Edemissen (DE); SEIFERT, Matthias, 21244 Buchholz (DE)
(86) Internationale Anmeldenummer: PCT/EP2018/052736
(87) Internationale Veröffentlichungsnummer: WO 2018/158039

(56) Entgegenhaltungen:
- EP-A1- 1 118 917
- WO-A1-2006/051355
- DE-A1- 4 113 959

## Beschreibung

Die Erfindung betrifft die Umschaltung zwischen Element-Controllern im Bahnbetrieb.

Die Patentanmeldung DE 41 13 959 A1 offenbart eine Einrichtung zur Überwachung einer elektronischen Steuerung, mit einem ersten und zweiten Rechner sowie zumindest einer einem der beiden Rechner zugeordneten Überwachungseinrichtung und einer ausgangsseitig mit den beiden Rechnern verbundenen ümschalteinrichtung, die mit einer Ansteuervorrichtung verschaltet ist, wobei die dem ersten Rechner zugeordnete Überwachungseinrichtung ausgangsseitig mit einem Eingang des zweiten Rechners signalubertragend verbunden ist. Durch diese kreuzweise Verschaltung der den Rechnern zugeordneten Überwachungseinrichtungen ist im Fehlerfall beziehungsweise bei fehlerhaft auftretenden Signalen Redundanz sichergestellt. In der Patentanmeldung EP 1 118 917 A1 sind verschiedene Ausführungsformen einer Servosteuervorrichtung beschrieben. Bei einer AusfUhrungsform ist ein Referenzsteuerungseinsteller über eine erste Verbindung mit einem Master-Servocontroller und über eine zweite Verbindungmit einem Slave-Servocontroller verbunden, wobei der Ausgang desSlave-Servocontroller zur Steuerung anstelle desjenigen des MasterServocontroller zum Aktor geführt wird, im Falle eines detektierten Fehlers auf der Seite des Master-Servocontroller.

Ein Element-Controller (EC), auch bezeichnet als ein Steuergerät am Gleis, ist über mindestens eine Datenverbindungen mit einem Stellwerk verbunden. Die Datenverbindung kann beispielsweise vom Typ Ethernet sein. Der Element-Controller stellt eine lokale Signalverarbeitung bereit und ist eingerichtet für einen Anschluss von eisenbahntechnischen Aktuatoren oder Sensoren. Im Zusammenspiel mit den Aktuatoren oder Sensoren ist es beispielsweise möglich, Weichen und/oder Signale anzusteuern und/oder Gleiskreise oder Achszähler auszulesen. Der Element-Controller stellt somit die Schnittstelle zwischen dem Stellwerk und den eisenbahntechnischen Aktuatoren oder Sensoren bereit.

Durch den Ausfall eines Element-Controllers würde der angeschlossene Aktuator oder Sensor für das Stellwerk nicht mehr zur Verfügung stehen. Dies schränkt die Verfügbarkeit und/oder die durch den Element-Controller bereitgestellte Funktion deutlich ein.

Die Aufgabe der Erfindung besteht darin, die vorstehend genannten Nachteile zu vermeiden und insbesondere eine effiziente und sichere Lösung im Umgang mit derartigen Element-Controllern bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird ein Verfahren vorgeschlagen zum Umschalten zwischen Element-Controllern durch ein Stellwerk,
- bei dem das Stellwerk einen Fehler in einem ersten Element-Controller bestimmt,
- bei dem das Stellwerk den zweiten Element-Controller aktiviert,
- bei dem der zweite Element-Controller über ein Triggersignal eine Auswahlschaltung so ansteuert, dass der Ausgang des zweiten Element-Controllers statt des Ausgangs des ersten Element-Controllers mit mindestens einem Aktuator und/oder mindestens einem Sensor verbunden wird.

Eine Weiterbildung ist es, dass das Stellwerk den Fehler bestimmt anhand einer Nachricht, insbesondere einer Fehlernachricht von dem ersten Element-Controller.

Die Nachricht bzw. Fehlernachricht deutet beispielsweise einen Defekt in dem Element-Controller an.

Gemäß der Erfindung weist jeder der Element-Controller mindestens zwei Schnittstellen auf, wobei jede der Schnittstellen über eine Kommunikationsverbindung mit dem Stellwerk verbunden ist.

Die Schnittstelle eine Ethernet-Schnittstelle und die Kommunikationsverbindung ist eine Ethernet-Verbindung. Auch ist es eine Weiterbildung, dass
- jeder der Element-Controller eine Kommunikationseinheit und eine Sicherheitssteuerung aufweist,
- wobei die Kommunikationseinheit über die mindestens zwei Schnittstellen mit dem Stellwerk verbunden ist,
- wobei die Sicherheitssteuerung zwischen der Kommunikationseinheit und der Auswahlschaltung vorgesehen ist.

Ferner ist es eine Weiterbildung, dass der mindestens eine Aktuator und/oder der mindestens eine Sensor mindestens eine(n) der folgenden umfassen:
- eine Balise,
- einen Achszähler,
- eine Weiche,
- ein Signal.

Gemäß der Erfindung weist das Stellwerk eine Redundanz-Logik auf zum Ansteuern des ersten Element-Controllers oder des zweiten Element-Controllers.

Die Ausführungen betreffend das Verfahren gelten für die anderen Anspruchskategorien entsprechend.

Weiterhin wird zur Lösung der vorstehenden Aufgabe ein System vorgeschlagen zum Umschalten zwischen Element-Controllern
- umfassend ein Stellwerk, einen ersten Element-Controller, einen zweiten Element-Controller und eine Auswahlschaltung,
- wobei das Stellwerk derart eingerichtet ist,
   - dass ein Fehler in dem ersten Element-Controller bestimmbar ist,
   - dass basierend auf dem Fehler der zweite Element-Controller aktivierbar ist,
- wobei der zweite Element-Controller derart eingerichtet ist, dass über ein Triggersignal die Auswahlschaltung derart ansteuerbar ist, dass der Ausgang des zweiten Element-Controllers statt des Ausgangs des ersten Element-Controllers mit mindestens einem Aktuator und/oder mindestens einem Sensor verbunden wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.1: eine schematische Anordnung, bei der ein Element-Controller über zwei Ethernet-Verbindungen mit einem Stellwerk verbunden ist, wobei der Element-Controller zwei (redundante) Ethernet-Schnittstellen, eine Kommunikationseinheit und eine Sicherheitssteuerung aufweist;
- Fig.2: ein schematisches Schaubild mit zwei Element-Controllern, anhand derer die Ausfallsicherheit der Kommunikation mit einem Stellwerk gegenüber dem in Fig.1 gezeigten Beispiel erhöht ist.

Es wird vorgeschlagen, eine lokale Redundanz für den Element-Controller bereitzustellen.

Beispielsweise verfügt das Stellwerk über die Möglichkeit, unterscheiden zu können, ob ein einzelner Element-Controller oder ob eine redundante (z.B. doppelte) Konfiguration von Element-Controllern vorhanden ist.

Hierbei kann jeder der beiden Element-Controller als EC Master und der andere als EC Slave agieren. Das Stellwerk legt fest, welcher der beiden Element-Controller der EC Master und welcher der EC Slave ist.

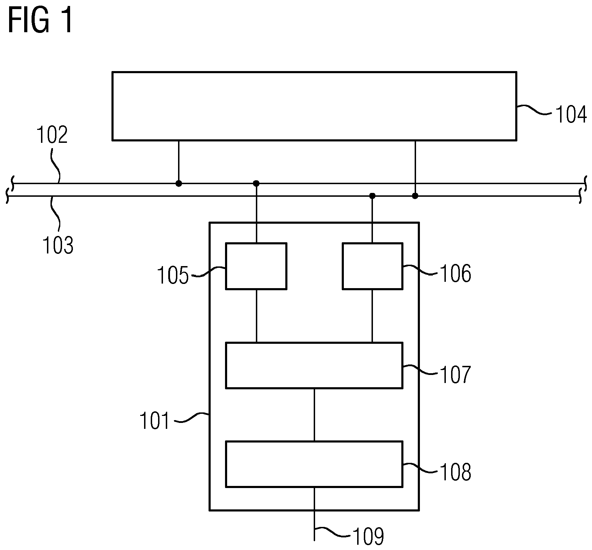

Fig.1 zeigt eine schematische Anordnung, bei der ein Element-Controller 101 über zwei Ethernet-Verbindungen 102, 103 mit einem Stellwerk 104 verbunden ist. Hierzu weist der Element-Controller 101 zwei Ethernet-Schnittstellen 105, 106 auf, wobei die Ethernet-Schnittstelle 105 mit der Ethernet-Verbindung 102 und die Ethernet-Schnittstelle 106 mit der Ethernet-Verbindung 103 verbunden ist.

Der Ethernet-Controller 101 weist weiterhin eine Kommunikationseinheit 107 und eine Sicherheitssteuerung 108 auf.

Die beiden Ethernet-Schnittstellen 105, 106 sind mit der Kommunikationseinheit 107 verbunden. Die Kommunikationseinheit 107 ist weiterhin mit der Sicherheitssteuerung 108 verbunden und die Sicherheitssteuerung 108 weist eine Verbindung 109 zu mindestens einem Aktuator und/oder mindestens einem Sensor auf.

Beispielsweise übermittelt das Stellwerk 104 (im Wesentlichen) gleichzeitig über die Ethernet-Verbindungen 102, 103 und die Ethernet-Schnittstellen 105, 106 einen Stellwerksbefehl an den Element-Controller 101. Somit gibt es zwei Kommunikationswege (Ethernet-Verbindung 102 mit Ethernet-Schnittstelle 105 bzw. Ethernet-Verbindung 103 mit Ethernet-Schnittstelle 106) zwischen dem Stellwerk 104 und dem Element-Controller 101.

Fällt einer dieser Kommunikationswege aus, kann die Kommunikation zwischen dem Stellwerk 104 und dem Element-Controller 101 immer noch über den anderen Kommunikationsweg erfolgen.

Fällt die Kommunikationseinheit 107 aus, kommt es zu einem Ausfall des Element-Controllers 101 und den damit verbundenen Störungen.

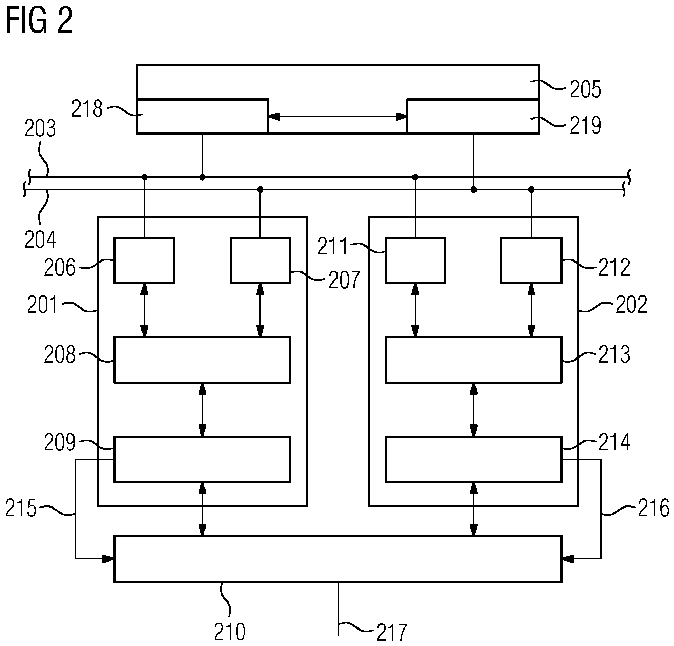

Fig.2 zeigt ein schematisches Schaubild mit zwei Element-Controllern 201, 202, anhand derer die Ausfallsicherheit gegenüber dem in Fig.1 gezeigten Beispiel erhöht ist.

Der Element-Controller 201 ist über zwei Ethernet-Verbindungen 203, 204 mit dem Stellwerk 205 verbunden. Hierzu weist der Element-Controller 201 zwei Ethernet-Schnittstellen 206, 207 auf, wobei die Ethernet-Schnittstelle 206 mit der Ethernet-Verbindung 203 und die Ethernet-Schnittstelle 207 mit der Ethernet-Verbindung 204 verbunden ist. Der Ethernet-Controller 201 weist weiterhin eine Kommunikationseinheit 208 und eine Sicherheitssteuerung 209 auf. Die beiden Ethernet-Schnittstellen 206, 207 sind mit der Kommunikationseinheit 208 verbunden. Die Kommunikationseinheit 208 ist weiterhin mit der Sicherheitssteuerung 209 verbunden.

Die Sicherheitssteuerung 209 ist mit einer Redundanzauswahl-Einheit 210 (auch bezeichnet als Auswahlschaltung) verbunden und die Redundanzauswahl-Einheit 210 weist eine Verbindung 217 zu mindestens einem Aktuator und/oder mindestens einem Sensor auf.

Der Element-Controller 202 ist über die zwei Ethernet-Verbindungen 203, 204 mit dem Stellwerk 205 verbunden. Hierzu weist der Element-Controller 202 zwei Ethernet-Schnittstellen 211, 212 auf, wobei die Ethernet-Schnittstelle 211 mit der Ethernet-Verbindung 203 und die Ethernet-Schnittstelle 212 mit der Ethernet-Verbindung 204 verbunden ist. Der Ethernet-Controller 202 weist weiterhin eine Kommunikationseinheit 213 und eine Sicherheitssteuerung 214 auf. Die beiden Ethernet-Schnittstellen 211, 212 sind mit der Kommunikationseinheit 213 verbunden. Die Kommunikationseinheit 213 ist weiterhin mit der Sicherheitssteuerung 214 verbunden.

Die Sicherheitssteuerung 214 ist mit der Redundanzauswahl-Einheit 210 verbunden. Weiterhin kann sowohl der Element-Controller 201 ein Mastertriggersignal an die Redundanzauswahl-Einheit 210 (angedeutet durch eine Verbindung 215) als auch kann der Element-Controller 202 ein Mastertriggersignal an die Redundanzauswahl-Einheit 210 (angedeutet durch eine Verbindung 216) übermitteln.

Das Stellwerk 205 ist über eine Redundanz-Logik 218 mit der Ethernet-Verbindung 203 und über eine Redundanz-Logik 219 mit der Ethernet-Verbindung 204 verbunden. Weiterhin ist eine Kommunikation zwischen der Redundanz-Logik 218 und der Redundanz-Logik 219 vorgesehen.

Beispielsweise hat im vorliegenden Fall das Stellwerk 205 bestimmt, dass der Element-Controller 201 als EC Master (also als aktiver Element-Controller) und der Element-Controller 202 als EC Slave (also als passiver oder Stand-by Element-Controller) agiert.

Somit zeigt Fig.2 eine Konfiguration, anhand derer mittels zweier Element-Controller 201, 202 mit dem Stellwerk 205 über jeweils zwei Kommunikationswege (ein Kommunikationsweg umfasst eine der Ethernet-Schnittstellen) kommuniziert werden kann.

Fällt ein Kommunikationsweg des aktiven Element-Controllers 201 aus, so kann dieser Element-Controller 201 immer noch über den anderen Kommunikationsweg mit dem Stellwerk 205 kommunizieren.

Fallen hingegen in dem aktiven Element-Controller 201 die Kommunikationseinheit 208 oder die Sicherheitssteuerung 209 aus, so entscheidet das Stellwerk 205, ob eine Umschaltung auf den anderen Element-Controller 202 durchgeführt werden soll.

Im vorliegenden Fall möchte das Stellwerk 205 eine Umschaltung von dem Element-Controller 201 auf den Element-Controller 202 durchführen. Beispielsweise erfährt das Stellwerk 205 von dem Element-Controller 201, dass dessen Kommunikationseinheit 208 (oder dessen Sicherheitssteuerung 209) ausgefallen ist, so dass das Stellwerk 205 den Element-Controller 202 informiert, die Kommunikation mit den angeschlossenen Aktuatoren und/oder Sensoren zu übernehmen.

Der Element-Controller 202 übermittelt hierzu das Mastertriggersignal 216 an die Redundanzauswahl-Einheit 210, so dass infolgedessen eine Umschaltung aller Ein- und Ausgänge von dem Element-Controller 201 auf den Element-Controller 202 erfolgt.

Beispielsweise kann die Redundanzauswahl-Einheit 210 eine Schaltung aufweisen, die sicherstellt, dass entweder die Ein-/Ausgänge der Sicherheitssteuerung 209 oder die Ein-/Ausgänge der Sicherheitssteuerung 214 über die Verbindung 217 mit den Aktuatoren und/oder Sensoren verbunden sind.

Ergänzend sei angemerkt, dass es vorkommen kann, dass (noch) keiner der Element-Controller den Zustand EC Master eingenommen hat. Dies kann z.B. bei der Initialisierung oder wenn beide Element-Controller defekt sind vorkommen. In diesem Fall würde keines der Mastertriggersignale 215, 216 einen EC Master bestimmen und die Ein- und Ausgänge auf den beiden Element-Controllern 201, 202 wären passiv, d.h. es würde keine Signale über die Verbindung 217 eingelesen oder ausgegeben.

Somit kann der jeweilige Element-Controller 201, 202 durch Übermittlung des Mastertriggersignals 215, 216 die Redundanzauswahl-Einheit 210 derart ansteuern, dass der Übermittler des Mastertriggersignals 215, 216 als Master zur Kommunikation mit den Aktuatoren und/oder Sensoren über die Verbindung 217 aktiv geschaltet wird.

Beispielsweise können die folgenden Fälle unterschieden werden:
- Ist nur eine der Ethernet-Schnittstellen 206, 207 des aktiven Element-Controllers 201 defekt, erfolgt keine Umschaltung auf den Element-Controller 202. Optional könnte auch in diesem Fall eine Umschaltung auf den Element-Controller 202 durchgeführt werden, da der Element-Controller 201 bereits einen Defekt aufweist und somit dessen redundante Funktionalität eingeschränkt ist. Beispielsweise könnte die Reparatur des Element-Controllers 201 veranlasst werden und nach abgeschlossener Reparatur könnte wieder auf den Element-Controller 201 umgeschaltet werden.
- Ist die Kommunikationseinheit 208 des aktiven Element-Controllers 201 defekt, erfolgt die Umschaltung auf den Element-Controller 202.
- Ist die Sicherheitssteuerung 209 des aktiven Element-Controllers 201 defekt oder meldet diese Sicherheitssteuerung 209 einen Fehler, erfolgt die Umschaltung auf den Element-Controller 202.
- Sind die Kommunikationseinrichtungen 208, 209 beider Element-Controller 201, 202 defekt, erfolgt eine Fehlermeldung an das Stellwerk 205 und beide Element-Controller 201, 202 werden deaktiviert.
- Stellen nacheinander beide Sicherheitssteuerungen 209, 214 Fehler fest, erfolgt eine Fehlermeldung an das Stellwerk 205 und beide Element-Controller 201, 202 werden deaktiviert.

Ist die Kommunikationseinheit 208, 213 oder die Sicherheitssteuerung 209, 214 defekt, meldet dies der jeweilige Element-Controller 201, 202 dem Stellwerk 205. Das Stellwerk 205 verfügt über Redundanz-Logik 218, 219, um zu bestimmen, ob ein Umschalten auf den anderen Element-Controller 201, 202 durchgeführt werden soll. Die Redundanz-Logik 218, 219 ist selbst auch doppelt ausgeführt, um einen Ausfall einer einzelnen Redundanz-Logik 218, 219 kompensieren zu können.

Ob eine Umschaltung zwischen den Element-Controllern 201, 202 durchgeführt werden soll, wird beispielsweise basierend auf einer Auswertung der Kommunikation zwischen dem aktiven Element-Controller 201, 202 und dem Stellwerk 205 bestimmt. Dies kann beispielsweise mittels der Redundanz-Logik 218, 219 bestimmt werden.

Ein Vorteil dieser Ausgestaltung besteht darin, dass ausgangsseitig die Element-Controller 201, 202 keine Redundanz-logik benötigen. Die Fehlererkennung und die Auswertung von Fehlerzuständen kann in der Redundanz-Logik 218, 219 unter Berücksichtigung der Gesamtsituation erfolgen.

Bei den gezeigten Kommunikationseinheiten 107, 208 und 213 kann es sich um Komponenten handeln, die einen niedrigen oder keinen Sicherheits-Integritätslevel (SIL) aufweisen. Bei den gezeigten Sicherheitssteuerungen 108, 209 und 214 kann es sich um Komponenten handeln, die einen hohen Sicherheits-Integritätslevel (SIL), z.B. SIL 4, aufweisen.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

## Patentansprüche

1. Verfahren zum Umschalten zwischen Element-Controllern (201, 202) durch ein Stellwerk (205),
- bei dem das Stellwerk (205) einen Fehler in einem ersten Element-Controller (201) bestimmt,
- bei dem das Stellwerk (205) den zweiten Element-Controller (202) aktiviert,
- bei dem der zweite Element-Controller (202) über ein Triggersignal (216) eine Auswahlschaltung (210) so ansteuert, dass der Ausgang des zweiten Element-Controllers (202) statt des Ausgangs des ersten Element-Controllers (201) mit mindestens einem Aktuator und/oder mindestens einem Sensor verbunden (217) wird,
- bei dem der erste Element-Controller (201) zwei als Ethernet-Schnittstellen (206, 207) ausgebildete Schnittstellen aufweist und über zwei als Ethernet-Verbindungen (203, 204) ausgebildete Kommunikationsverbindungen mit dem Stellwerk (205) kommuniziert, wobei eine (206) der beiden Ethernet-Schnittstellen des ersten Element-Controllers (201) mit einer (203) der beiden Ethernet-Verbindungen verbunden ist und wobei die andere (207) der beiden Ethernet-Schnittstellen des ersten Element-Controllers (201) mit der anderen (204) der beiden Ethernet-Verbindungen verbunden ist,
- bei dem der zweite Element-Controller (202) zwei als Ethernet-Schnittstellen (206, 207) ausgebildete Schnittstellen aufweist und über zwei als Ethernet-Verbindungen (211, 212) ausgebildete Kommunikationsverbindungen mit dem Stellwerk (205) kommuniziert, wobei eine (211) der beiden Ethernet-Schnittstellen des zweiten Element-Controllers (202) mit der einen Ethernet-Verbindung (203) verbunden ist und wobei die andere (212) der beiden Ethernet-Schnittstellen des zweiten Element-Controllers (202) mit der anderen Ethernet-Verbindung (204) verbunden ist, und
- bei dem das Stellwerk (205) eine aus zwei einzelnen Redundanz-Logiken gebildete und somit doppelt ausgeführte Redundanz-Logik (218, 219) aufweist, in der das Erkennen des Fehlers erfolgt, wobei eine (218) der einzelnen Redundanz-Logiken mit der einen Ethernet-Verbindung (203) verbunden ist, wobei die andere (219) der einzelnen Redundanz-Logiken mit der anderen Ethernet-Verbindung (204) verbunden ist und wobei zwischen den zwei einzelnen Redundanz-Logiken (218, 219) eine Kommunikation vorgesehen ist.

2. Verfahren nach Anspruch 1, bei dem das Stellwerk den Fehler bestimmt anhand einer Nachricht, insbesondere einer Fehlernachricht von dem ersten Element-Controller.

3. Verfahren nach einem der vorhergehenden Ansprüche,
- bei dem jeder der Element-Controller eine Kommunikationseinheit und eine Sicherheitssteuerung aufweist,
- wobei die Kommunikationseinheit über die mindestens zwei Schnittstellen mit dem Stellwerk verbunden ist,
- wobei die Sicherheitssteuerung zwischen der Kommunikationseinheit und der Auswahlschaltung vorgesehen ist.

4. Verfahren nach einem der vorhergehenden Ansprüche, bei dem der mindestens eine Aktuator und/oder der mindestens eine Sensor mindestens eine(n) der folgenden umfassen:
- eine Balise,
- einen Achszähler,
- eine Weiche,
- ein Signal.

5. System zum Umschalten zwischen Element-Controllern (201, 202)
- umfassend ein Stellwerk (205), einen ersten Element-Controller (201), einen zweiten Element-Controller (202) und eine Auswahlschaltung (210),
- bei dem das Stellwerk (205) derart eingerichtet ist,
- dass ein Fehler in dem ersten Element-Controller (201) bestimmbar ist,
- dass basierend auf dem Fehler der zweite Element-Controller (202) aktivierbar ist,
- bei dem der zweite Element-Controller (202) derart eingerichtet ist, dass über ein Triggersignal (216) die Auswahlschaltung (210) derart ansteuerbar ist, dass der Ausgang des zweiten Element-Controllers (202) statt des Ausgangs des ersten Element-Controllers (201) mit mindestens einem Aktuator und/oder mindestens einem Sensor verbunden wird,
- bei dem der erste Element-Controller (201) zwei als Ethernet-Schnittstellen (206, 207) ausgebildete Schnittstellen aufweist und eingerichtet ist, über zwei als Ethernet-Verbindungen (203, 204) ausgebildete Kommunikationsverbindungen mit dem Stellwerk (205) zu kommunizieren, wobei eine (206) der beiden Ethernet-Schnittstellen des ersten Element-Controllers (201) mit einer (203) der beiden Ethernet-Verbindungen verbunden ist und wobei die andere (207) der beiden Ethernet-Schnittstellen des ersten Element-Controllers (201) mit der anderen (204) der beiden Ethernet-Verbindungen verbunden ist,
- bei dem der zweite Element-Controller (202) zwei als Ethernet-Schnittstellen (206, 207) ausgebildete Schnittstellen aufweist und eingerichtet ist, über zwei als Ethernet-Verbindungen (211, 212) ausgebildete Kommunikationsverbindungen mit dem Stellwerk (205) zu kommunizieren, wobei eine (211) der beiden Ethernet-Schnittstellen des zweiten Element-Controllers (202) mit der einen Ethernet-Verbindung (203) verbunden ist und wobei die andere (212) der beiden Ethernet-Schnittstellen des zweiten Element-Controllers (202) mit der anderen Ethernet-Verbindung (204) verbunden ist, und
- bei dem das Stellwerk (205) eine aus zwei einzelnen Redundanz-Logiken gebildete und somit doppelt ausgeführte Redundanz-Logik (218, 219) aufweist, in der das Erkennen des Fehlers erfolgt, wobei eine (218) der einzelnen Redundanz-Logiken mit der einen Ethernet-Verbindung (203) verbunden ist, wobei die andere (219) der einzelnen Redundanz-Logiken mit der anderen Ethernet-Verbindung (204) verbunden ist und wobei zwischen den zwei einzelnen Redundanz-Logiken (218, 219) eine Kommunikation vorgesehen ist.

## Claims

1. Method for switching over between element controllers (201, 202) by way of a signal box (205),
- in which the signal box (205) detects an error in a first element controller (201),
- in which the signal box (205) activates the second element controller (202),
- in which the second element controller (202) uses a trigger signal (216) to actuate a selection circuit (210) such that the output of the second element controller (202), instead of the output of the first element controller (201), is connected (217) to at least one actuator and/or at least one sensor,
- in which the first element controller (201) has two interfaces embodied as Ethernet interfaces (206, 207) and communicates with the signal box (205) via two communication connections embodied as Ethernet connections (203, 204), wherein one (206) of the two Ethernet interfaces of the first element controller (201) is connected to one (203) of the two Ethernet connections and wherein the other (207) of the two Ethernet interfaces of the first element controller (201) is connected to the other (204) of the two Ethernet connections,
- in which the second element controller (202) has two interfaces embodied as Ethernet interfaces (206, 207) and communicates with the signal box (205) via two communication connections embodied as Ethernet connections (211, 212), wherein one (211) of the two Ethernet interfaces of the second element controller (202) is connected to the one Ethernet connection (203) and wherein the other (212) of the two Ethernet interfaces of the second element controller (202) is connected to the other Ethernet connection (204), and
- in which the signal box (205) has a redundancy logic (218, 219) formed of two individual redundancy logics and therefore designed in a duplicate manner, in which the detection of the error takes place, wherein one (218) of the individual redundancy logics is connected to the one Ethernet connection (203), wherein the other (219) of the individual redundancy logics is connected to the other Ethernet connection (204) and wherein a communication is provided between the two individual redundancy logics (218, 219).

2. Method according to claim 1, in which the signal box detects the error on the basis of a message, in particular an error message from the first element controller.

3. Method according to one of the preceding claims,
- in which each of the element controllers has a communication unit and a safety controller,
- wherein the communication unit is connected to the signal box via the at least two interfaces,
- wherein the safety controller is provided between the communication unit and the selection circuit.

4. Method according to one of the preceding claims, in which the at least one actuator and/or the at least one sensor comprise at least one of the following:
- a balise,
- an axle counter,
- a set of points,
- a signal.

5. System for switching over between element controllers (201, 202)
- comprising a signal box (205), a first element controller (201), a second element controller (202) and a selection circuit (210),
- wherein the signal box (205) is configured such that
- a failure in the first element controller (201) is able to be detected,
- the second element controller (202) is able to be activated on the basis of the error,
- in which the second element controller (202) is configured such that the selection circuit (210) can be actuated via a trigger signal (216) such that the output of the second element controller (202), instead of the output of the first element controller (201), is connected to at least one actuator and/or at least one sensor,
- in which the first element controller (201) has two interfaces embodied as Ethernet interfaces (206, 207) and is configured to communicate with the signal box (205) via two communication connections embodied as Ethernet connections (203, 204), wherein one (206) of the two Ethernet interfaces of the first element controller (201) is connected to one (203) of the two Ethernet connections and wherein the other (207) of the two Ethernet interfaces of the first element controller (201) is connected to the other (204) of the two Ethernet connections,
- in which the second element controller (202) has two interfaces embodied as Ethernet interfaces (206, 207) and is configured to communicate with the signal box (205) via two communication connections embodied as Ethernet connections (211, 212), wherein one (211) of the two Ethernet interfaces of the second element controller (202) is connected to the one Ethernet connection (203) and wherein the other (212) of the two Ethernet interfaces of the second element controller (202) is connected to the other Ethernet connection (204), and
- in which the signal box (205) has a redundancy logic (218, 219) formed of two individual redundancy logics and therefore designed in a duplicate manner, in which the detection of the error takes place, wherein one (218) of the individual redundancy logics is connected to the one Ethernet connection (203), wherein the other (219) of the individual redundancy logics is connected to the other Ethernet connection (204) and wherein a communication is provided between the two individual redundancy logics (218, 219).

## Revendications

1. Procédé de commutation entre des unités (201, 202) de commande d'éléments par un poste (205) d'aiguillage,
- dans lequel le poste (205) d'aiguillage détermine un défaut dans une première unité (201) de commande d'élément,
- dans lequel le poste (205) d'aiguillage active la deuxième unité (202) de commande d'élément,
- dans lequel la deuxième unité (202) de commande d'élément commande un circuit (210) de sélection par l'intermédiaire d'un signal (216) de déclenchement, de manière à relier (217) la sortie de la deuxième unité (202) de commande d'élément au lieu de la sortie de la première unité (201) de commande d'élément à au moins un actionneur et/ou au moins un capteur,
- dans lequel la première unité (201) de commande d'élément a deux interfaces constituées en interfaces (206, 207) d'Ethernet et communique avec le poste (205) d'aiguillage par deux liaisons de communication constituées en liaisons (203, 204) d'Ethernet, l'une (206) des deux interfaces d'Ethernet de la première unité (201) de commande d'élément étant reliée à l'une (203) des deux liaisons d'Ethernet et dans lequel l'autre (207) des deux interfaces d'Ethernet de la première unité (201) de commande d'élément étant reliée à l'autre (204) des deux liaisons d'Ethernet,
- dans lequel la deuxième unité (202) de commande d'élément a deux interfaces constituées en interfaces (206, 207) d'Ethernet et communique avec le poste (205) d'aiguillage par deux liaisons de communication constituées en liaisons (211, 212) d'Ethernet, l'une (211) des deux interfaces d'Ethernet de la deuxième unité (202) de commande d'élément étant reliée à la une liaison (203) d'Ethernet et l'autre (212) des deux interfaces d'Ethernet de la deuxième unité (202) de commande d'élément étant reliée à l'autre liaison (204) d'Ethernet, et
- dans lequel le poste (205) d'aiguillage a une logique (218, 219) de redondance formée de deux logiques de redondance individuelles et est ainsi réalisé en double, logique dans laquelle s'effectue la détection du défaut, l'une (218) des logiques de redondance individuelles étant reliée à la une liaison (203) d'Ethernet, l'autre (219) des logiques de redondance individuelles étant reliée à l'autre liaison (204) d'Ethernet et il est prévu une communication entre les deux logiques (218, 219) de redondance individuelles.

2. Procédé suivant la revendication 1, dans lequel le poste d'aiguillage définit le défaut à l'aide d'un message, notamment d'un message de défaut, par la première unité de commande d'élément.

3. Procédé suivant l'une des revendications précédentes,
- dans lequel chacune des unités de commande d'élément a une unité de communication et une commande de sécurité,
- dans lequel l'unité de communication est reliée au poste d'aiguillage par les au moins deux interfaces,
- dans lequel la commande de sécurité est prévue entre l'unité de communication et le circuit de sélection.

4. Procédé suivant l'une des revendications précédentes, dans lequel le au moins un actionneur et/ou le au moins un capteur comprend au moins l'un des suivants :
- une balise,
- un compteur d'essieux,
- un aiguillage,
- un signal.

5. Système de commutation entre des unités (201, 202) de commande d'éléments,
- comprenant un poste (205) d'aiguillage, une première unité (201) de commande d'élément, une deuxième unité (202) de commande d'élément et un circuit (210) de sélection,
- dans lequel le poste (205) d'aiguillage est conçu
- de manière à ce qu'un défaut de la première unité (201) de commande d'élément puisse être déterminé,
- de manière à pouvoir activer la deuxième unité (202) de commande d'élément sur la base du défaut,
- dans lequel la deuxième unité (202) de commande d'élément est conçue de manière à pouvoir commander le circuit (210) de sélection par un signal (216) de déclenchement, de manière à relier la sortie de la deuxième unité (202) de commande d'élément au lieu de la sortie de la première unité (201) de commande d'élément à au moins un actionneur et/ou au moins un capteur,
- dans lequel la première unité (201) de commande d'élément a deux interfaces constituées en interface (206, 207) d'Ethernet et est conçue pour communiquer avec le poste (205) d'aiguillage par deux liaisons de communication constituées en liaison (203, 204) d'Ethernet, l'une (206) des deux interfaces d'Ethernet de la première unité (201) de commande d'élément étant reliée à l'une (203) des deux liaisons d'Ethernet et l'autre (207) des deux interfaces d'Ethernet du la première unité (201) de commande d'élément étant reliée à l'autre (204) des deux liaisons d'Ethernet,
- dans lequel la deuxième unité (202) de commande d'élément a deux interfaces constituées en interfaces (206, 207) d'Ethernet et est conçue pour communiquer avec le poste (205) d'aiguillage par deux liaisons de communication constituées en liaisons (211, 212) d'Ethernet, l'une (211) des deux interfaces d'Ethernet de la deuxième unité (202) de commande d'élément étant reliée à la une liaison (203) d'Ethernet et l'autre (212) des deux interfaces d'Ethernet de la deuxième unité (202) de commande d'élément étant reliée à l'autre liaison (204) d'Ethernet, et
dans lequel le poste (205) d'aiguillage a une logique (218, 219) de redondance formée de deux logiques de redondance individuelles et est ainsi réalisé en double, logique dans laquelle s'effectue la détection du défaut, l'une (218) des logiques de redondance individuelles étant reliée à la une liaison (203) d'Ethernet, l'autre (219) des logiques de redondance individuelles étant reliée à l'autre liaison (204) d'Ethernet et il est prévu une communication entre les deux logiques (218, 219) de redondance individuelles.
